# EUROPEAN PATENT APPLICATION

(11) **EP 1 070 887 A2**
(43) Date of publication of application: **24.01.2001**
(21) Application number: 00306177.7
(22) Date of filing: 20.07.2000
(51) Int. Cl.: F16J 15/32

(54) **Brush seal having secured bristles**

(30) Priority: 17.02.2000 US 505804; 22.07.1999 US 145049 P
(71) Applicant: GENERAL ELECTRIC COMPANY, Schenectady, NY 12345 (US)
(72) Inventor: Aksit, Mahmut Faruk, Troy, NY 12180 (US); Dinc, Osman Saim, Troy, NY 12180 (US); Mayer, Robert Russell, Schenectady, NY 12306 (US)
(74) Representative: Pedder, James Cuthbert

(57) **Abstract**

A brush seal (110), for use in a machine such as a turbine, includes brush-seal bristles (112) and a brush-seal bristle holder (118). The bristles (112) are clamped between front and back plates (120,126) of the bristle holder (118). The front and back plates (120,126) are welded together by a weldment which is spaced apart from the bristles (118) eliminating stress cracks in metals wire bristles and eliminating weld contamination of ceramic-wire bristles and filament-yarn bristles.

## Description

The present invention relates generally to brush seals, and more particularly to a brush seal having bristles secured to a bristle holder.

Brush seals have been proposed (or used) to reduce fluid leakage in machines including, without limitation, electric generators, centrifugal pumps, and turbines for steam turbines and compressors and turbines for gas turbines. A steam turbine has a steam path which typically includes, in serial-flow relationship, a steam inlet, a turbine, and a steam outlet. A gas turbine has a gas path which typically includes, in serial-flow relationship, an air intake (or inlet), a compressor, a combustor, a turbine, and a gas outlet (or exhaust nozzle). Gas or steam leakage, either out of the gas or steam path or into the gas or steam path, from an area of higher pressure to an area of lower pressure, is generally undesirable. For example, gas-path leakage in the turbine or compressor area of a gas turbine, between the rotor of the turbine or compressor and the circumferentially surrounding turbine or compressor casing, will lower the efficiency of the gas turbine leading to increased fuel costs. Also, steam-path leakage in the turbine area of a steam turbine, between the rotor of the turbine and the circumferentially surrounding casing, will lower the efficiency of the steam turbine leading to increased fuel costs.

Annular brush seals have been proposed (or used) between a rotor and a surrounding casing in gas and steam turbines. The annular brush seal is made up of circumferentially-arrayed brush seal segments. Each brush seal segment is attached to the casing and includes bristles welded to a bristle holder. The bristle holder typically includes a back (i.e., downstream) plate, a front (i.e., upstream) plate, and bristles which are positioned between the flat surfaces of the back and front plates with the free ends of the bristles extending beyond the edges of the back and front plates and with the other ends of the bristles welded together and to the back and front plates. The bristles typically are canted at an angle of generally forty-five degrees in the direction of rotation of the rotor, and the free ends of the bristles are close to (and may even touch) the rotor. Typically, the front plate (and in some designs also portions of the back plate), near the free ends of the bristles, is spaced apart from the bristles to allow room for the bristles to flex and recover during transient encounters of the free ends of the bristles with the rotor. Welding of the metal wire bristles provides a secure attachment of the bristles to the front and back plates but produces unwanted stress cracks in the bristles which can lead to bristle failure. What is needed is an improved brush seal which provides a secure attachment of the bristles to the back and front plates without damage to the bristles.

In a first expression of an embodiment of the invention, a brush seal includes bristles and a bristle holder. The bristle holder has a front plate including opposing first and second edges and has a back plate including opposing first and second edges. The bristles are placed between the front and back plates with the first ends of the bristles located between the first and second edges of the front and back plates, with the first ends of the bristles spaced apart from the first edges of the front and back plates, and with the second ends of the bristles extending beyond the second edges of the front and back plates. The bristles are clamped between the front and back plates, and the front and back plates are welded together near the first edges of the front and back plates by a weldment which is spaced apart from the bristles.

In a second expression of an embodiment of the invention, a brush seal includes filament-yarn bristles and a bristle holder. The bristle holder has a front plate including opposing first and second edges and has a back plate including opposing first and second edges. The bristles are placed between the front and back plates with the first ends of the bristles located between the first and second edges of the front and back plates, with the first ends of the bristles spaced apart from the first edges of the front and back plates, and with the second ends of the bristles extending beyond the second edges of the front and back plates. The bristles are clamped between the front and back plates, and the front and back plates are welded together near the first edges of the front and back plates by a weldment which is spaced apart from the bristles. The front plate has a first surface including a first step, the back plate has a second surface including a second step proximate and opposing the first step, and the bristles are positioned between the first and second surfaces. The first surface near the first step contacts some of the bristles, and the second surface near the second step contacts some of the bristles.

Several benefits and advantages are derived from the invention. Having a brush-seal design wherein the front and back plates are welded together with a weldment which is spaced apart from the bristles eliminates stress cracks in metal bristles and eliminates unwanted weld contamination in filament-yarn bristles, ceramic bristles, or bristles of other composition. Having a clamping surface of the front and/or back plates be non-planar provides a more secure attachment of the bristles to the bristle holder. For example, and without limitation, having a back plate with pinch points should positively lock larger-diameter metal bristles, having proximate and opposing steps should positively lock smaller-diameter filament-yarn bristles, and clamping ceramic bristles between front and back plates defining an undulating channel should positively lock ceramic bristles without breaking them.

The invention will now be described in greater detail, by way of example, with reference to the drawings, in which:
Figure 1 is a schematic, front-elevational view of a first embodiment of a brush seal of the invention;
Figure 2 is a view of the brush seal of Figure 1 taken along lines 2-2 of Figure 1;
Figure 3 is a view as in Figure 2 but of a second embodiment of a brush seal of the invention;
Figure 4 is a view as in Figure 2 but of a third embodiment of a brush seal of the invention;
Figure 5 is a view as in Figure 2 but of a fourth embodiment of a brush seal of the invention; and
Figure 6 is a view as in Figure 2 but of a fifth embodiment of a brush seal of the invention.

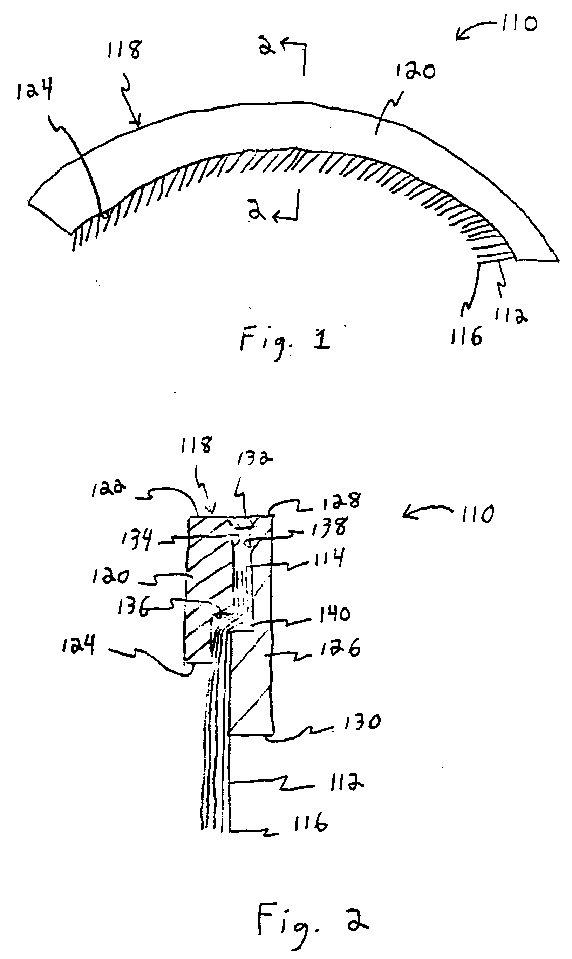

Referring now to the drawings, Figures 1 and 2 schematically show a first embodiment of a brush seal 110 of the present invention. In a first expression of the embodiment, the brush seal 110 includes a plurality of brush-seal bristles 112 each having a first end 114 and a second end 116. The brush seal 110 also includes a brush-seal bristle holder 118 having a weldable front plate 120 including opposing first and second edges 122 and 124 and having a weldable back plate 126 including opposing first and second edges 128 and 130. The bristles 112 are disposed between the front and back plates 120 and 126 with the first ends 114 of the bristles 112 disposed between the first and second edges 122 & 124 and 128 & 130 of the front and back plates 120 and 126, with the first ends 114 of the bristles 112 spaced apart from the first edges 122 and 128 of the front and back plates 120 and 126, and with the second ends 116 of the bristles 112 extending beyond the second edges 124 and 130 of the front and back plates 120 and 126. The bristles 112 are clamped between the front and back plates 120 and 126. The front and back plates 120 and 126 are welded together proximate the first edges 122 and 128 of the front and back plates 120 and 126 by a weldment 132 which is spaced apart from the bristles 112. For the purpose of describing the present invention, it is understood that the term "weldable" includes brazable and the term "weldment" includes brazement. Further, it is also understood that a "weldment" includes original portions, such as overlying tap portions, of the front and back plates which are welded together and also includes a separate weldable material used to weld together the front and back plates. The front plate of a brush seal is that portion of a bristle holder which is intended to face upstream, and the back plate of a brush seal is that portion of a bristle holder which is intended to face downstream. For purposes of describing the invention, it is understood that the terminology "brush seal" includes, without limitation, a segment of a brush seal when such brush seal is manufactured in segments which are arrayed together to form the complete brush seal.

Brush seals, such as brush seal 110, are used for reducing leakage of a fluid across a pressure drop in a machine (not shown in the figures). They are typically employed between two machine components, such components being relatively rotating or nonrotating and/or relatively moving or nonmoving. Examples of such machines include, without limitation, electric generators, centrifugal pumps, compressor portions of gas turbines, and turbine portions of steam or gas turbines. In one installation, the bristle holder is attached to a stator of a rotary machine, and the second ends of the bristles are disposed proximate or touching a rotor of a rotary machine.

In one construction, the bristles 112 are weldable bristles. Weldable bristles include metal-wire bristles. Examples of metals used for the bristles include Haynes 25® alloy ( a cobalt-base alloy) and Inconel® X750 alloy (a nickel-base alloy).

In another construction, the bristles 112 are nonweldable bristles. Nonweldable bristles include filament-yarn bristles and ceramic-wire bristles. Examples of filament-yarns used for bristles include aramid filament yarns and polyester filament yarns. An example of a ceramic used for bristles is silicon carbide.

In one design, the front plate 120 has a first surface 134 including a first step 136, and the back plate 126 has a second surface 138 including a second step 140 proximate and opposing the first step 136. For the purpose of describing this design, two surfaces have steps which are opposing if the steps are facing in generally parallel and opposite directions. It is noted that the steps in the first embodiment of the brush seal 110, as seen in Figure 2, have square corners providing pinch points to secure the bristles 112. In this design, the bristles 112 are disposed between the first and second surfaces 134 and 138, wherein the first surface 134 proximate the first step 136 contacts some of the bristles 112, and wherein the second surface 138 proximate the second step 140 contacts some of the bristles 112. In one construction of this design, the bristles 112 are metal-wire bristles, and in another construction, the bristles 112 are filaments of an aramid filament yarn.

In the first embodiment of the brush seal 112 of the present invention, having a brush-seal design wherein the front and back plates 120 and 126 are welded together with a weldment 132 which is spaced apart from the bristles 112 eliminates stress cracks in metal bristles and eliminates unwanted weld contamination in filament-yarn bristles. Having surfaces 134 and 138 with opposing steps 136 and 140 should serve to positively clamp smaller-diameter filament-yarn bristles as well as larger-diameter metal-wire bristles to the bristle holder 118.

A second embodiment of the brush seal 210 of the present invention is shown in Figure 3 and is identical to the first embodiment shown in Figures 1 and 2 with differences hereinafter noted. In the construction shown in Figure 3, the bristles 212 are metal-wire bristles. In this embodiment, the first and second surfaces 234 and 238 together have an additional pair of proximate and opposing steps 242 and 244 disposed between the first step 236 and the weldment 232, with the additional steps 242 and 238 being overlapping and in contact with each other. The additional steps 242 and 238 provide a physical barrier, during the welding process, against any molten weldment reaching the first ends 214 of the bristles 212 so as to creating stress cracks in the bristles.

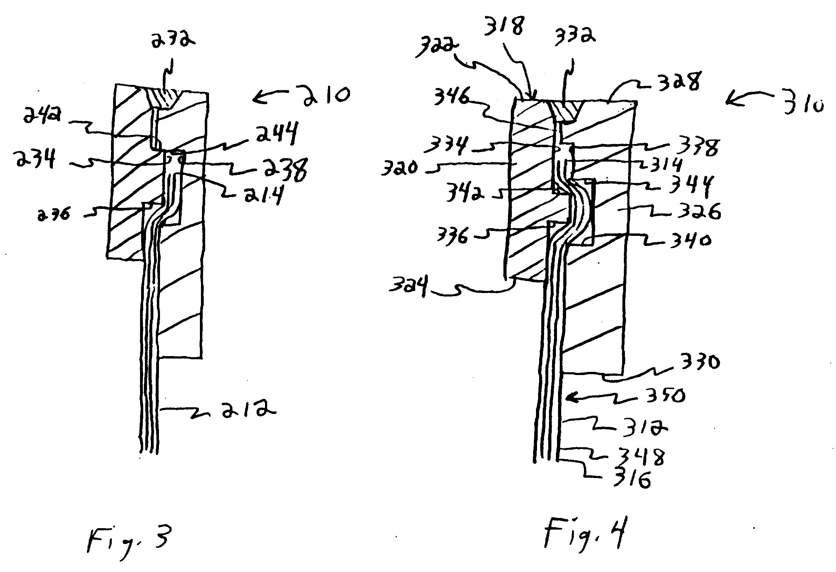

A third embodiment of the brush seal 310 of the present invention is shown in Figure 4 and is identical to the second embodiment shown in Figure 3 with differences hereinafter noted. In the construction shown in Figure 4, the bristles 312 are additionally clamped between additional step 342 of the first surface 334 and additional step 344 of the second surface 338, and the second surface 338 has a protrusion 346 between additional step 344 and the weldment 332, such protrusion 346 extending towards the first surface 334. The protrusion 346 provides at least a partial (and in some designs almost a complete) physical barrier, during the welding process, against any molten weldment reaching the first ends 314 of the bristles 212 so as to contaminate the bristles.

In the construction shown in Figure 4, the bristles 312 are filaments 348 of a filament yarn 350. Typically, each of the filaments 348 has a diameter of less than 0.001 inch (and in one example has a diameter of generally 0.00056 inch), a yarn 350 contains from 1,000 to 2,000 filaments 348, and a brush seal 310 contains between one and hundreds of yarns 350. Typically, the bristles 312 have a packing density of greater than 100,000 filaments per inch (and in one example has a packing density of generally 272,000 filaments per inch). In one construction, the bristles 312 are filaments 350 of an aramid filament yarn. An exemplary aramid filament yarn is a KEVLAR® (trademark of DuPont) aramid filament yarn. Other examples of filament yams include, without limitation, nylon, polyester, and fluorocarbon filament yarns. It is noted that, for purposes of describing this embodiment, the terminology "a yarn" includes "yarn segments" since a single long yarn typically is cut into many yarn segments having an identical length equal to the desired bristle length. Having the smaller-diameter filament-yarn bristles 312 clamped by two pairs of opposing steps 336 & 340 and 342 and 344 provides two pairs of pinch points to more securely lock the bristles 312 to the bristle holder 318.

In another expression of the third embodiment of the brush seal 310 shown in Figure 4, a brush seal 310 includes a plurality of brush-seal filament-yarn bristles 312 and a brush-seal bristle holder 318. The bristles 312 each have a first end 314 and a second end 316. The bristle holder 318 has a weldable front plate 320 including opposing first and second edges 322 and 324 and has a weldable back plate 326 including opposing first and second edges 328 and 330. The bristles 312 are disposed between the front and back plates 320 and 326, and the first ends 314 of the bristles 312 are disposed between the first and second edges 322 and 324 of the front and back plates 320 and 326. The first ends 314 of the bristles 312 are spaced apart from the first edges 322 & 324 and 328 & 330 of the front and back plates 320 and 326, and the second ends 316 of the bristles 312 extend beyond the second edges 324 and 330 of the front and back plates 320 and 326. The bristles 312 are clamped between the front and back plates 320 and 326, wherein the front and back plates 320 and 326 are welded together proximate the first edges 322 and 328 of the front and back plates 320 and 326 by a weldment 332 which is spaced apart from the bristles 312. The front plate 320 has a first surface 334 including a first step 336, and the back plate 326 has a second surface 338 including a second step 340 proximate and opposing the first step 336. The bristles 312 are disposed between the first and second surfaces 334 and 338, wherein the first surface 334 proximate the first step 336 contacts some of the bristles 312, and the second surface 338 proximate the second step 340 contacts some of the bristles 312. In one construction, each of the bristles 312 has a diameter of less than 0.001 inch, the bristles 312 are filaments 348 of a filament yarn 350 which is an aramid filament yarn. In one application, the bristles 312 have a packing density of greater than 100,000 filaments per inch.

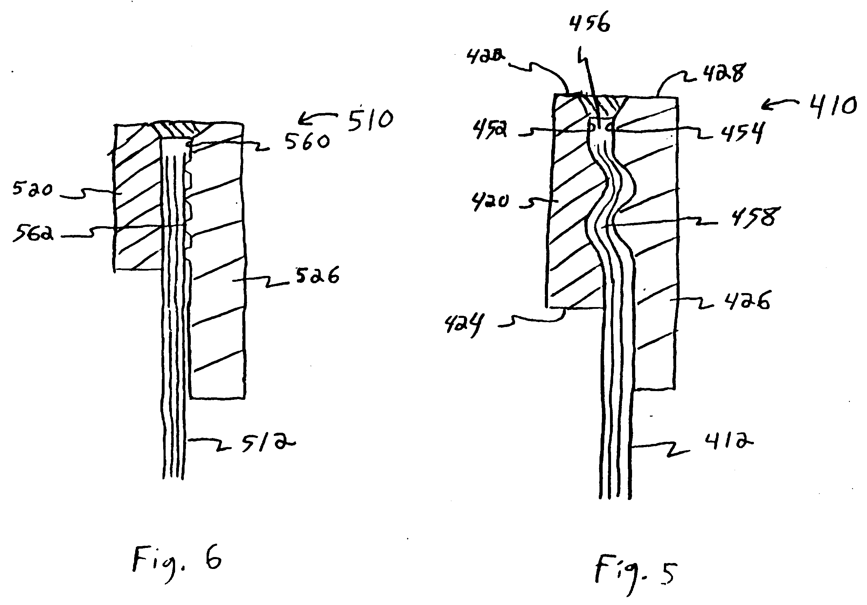

A fourth embodiment of the brush seal 410 of the present invention is shown in Figure 5 and is identical to the first embodiment shown in Figures 1 and 2 with differences hereinafter noted. In this embodiment, the front and back plates 420 and 426 have no steps clamping the bristles. Instead, the front plate 420 has a first surface portion 452 and the back plate 426 has a second surface potion 454 proximate and opposing the first surface portion 452. The first and second surface portions 452 and 454 are spaced apart to define a channel 456 having undulations 458 extending from the second edge 424 of the front plate 420 towards the first edges 422 and 428 of the front and back plates 420 and 426. The bristles 412 are partially disposed in the channel 456, wherein the first surface portion 452, at the boundary with the undulations 458, contacts some of the bristles 412, and wherein the second surface portion 454, at the boundary with the undulations 458, contacts some of the bristles 412. In one construction, the bristles 412 are ceramic bristles. Here, clamping the bristles 412 between undulating sections of the first and second surface portions 452 and 454 of the front and back plates 420 and 426 should positively lock ceramic bristles without breaking them.

A fifth embodiment of the brush seal 510 of the present invention is shown in Figure 6 and is identical to the first embodiment shown in Figures 1 and 2 with differences hereinafter noted. In this embodiment, the front and back plates 520 and 526 have no steps clamping the bristles. Instead, at least one of the front and back plates 520 and 526 has a surface (such as a surface 560 of the back plate 526) contacting some of the bristles 512, wherein the surface 560 is a non-planar surface. In one design, the surface 560 has a multiplicity of spaced-apart pinch points 562 contacting some of the bristles 512. For purposes of describing this embodiment, the terminology "pinch points" includes any uneven portion (such as a textured portion) of a surface such as a knurled portion, having surface height variations greater than 0.005 inch occurring more than ten times per inch of surface portion. In the design shown in Figure 6, the pinch points 562 are parallel ridges which would extend perpendicularly out of and into the plane of the paper. In one construction, the bristles 512 are metal bristles. Here, clamping the bristles 512 against pinch points 562 of a surface of the front and/or back plates 520 and 526 should positively lock larger-diameter metal bristles.

## Claims

1. A brush seal comprising:
a) a plurality of brush-seal bristles each having a first end and a second end; and
b) a brush-seal bristle holder having a weldable front plate including opposing first and second edges and having a weldable back plate including opposing first and second edges, wherein said bristles are disposed between said front and back plates with said first ends of said bristles disposed between said first and second edges of said front and back plates, with said first ends of said bristles spaced apart from said first edges of said front and back plates, and with said second ends of said bristles extending beyond said second edges of said front and back plates, wherein said ristles are clamped between said front and back plates, and wherein said front and back plates are welded together proximate said first edges of said front and back plates by a weldment which is spaced apart from said bristles.

2. The brush seal of claim 1, wherein said bristles are weldable bristles.

3. The brush seal of claim 1, wherein said bristles are non-weldable bristles.

4. The brush seal of claim 1, 2 or 3, wherein at least one of said front and back plates has a surface contacting some of said bristles, and wherein said surface is a non-planar surface.

5. The brush seal of claim 4, wherein said surface has a multiplicity of spaced-apart pinch points contacting some of said bristles.

6. The brush seal of claim 4 or 5, wherein said surface is a surface of said back plate.

7. The brush seal of claim 1, wherein said front plate has a first surface including a first step, wherein said back plate has a second surface including a second step proximate and opposing said first step, wherein said bristles are disposed between said first and second surfaces, wherein said first surface proximate said first step contacts some of said bristles, and wherein said second surface proximate said second step contacts some of said bristles.

8. The brush seal of claim 7, wherein said bristles are metal-wire bristles.

9. The brush seal of claim 7, wherein said bristles are filaments of a filament yarn.

10. The brush seal of claim 1, wherein said front plate has a first surface portion, wherein said back plate has a second surface portion proximate and opposing said first surface portion, wherein said first and second surface portions are spaced apart to define a channel having undulations extending from said second edge of said front plate towards said first edges of said front and back plates, wherein said, bristles are partially disposed in said channel, wherein said first surface portion contacts some of said bristles, and wherein said second surface portion contacts some of said bristles.

11. The brush seal of claim 10, wherein said bristles are ceramic bristles.

12. A brush seal comprising:
a) a plurality of brush-seal filament-yarn bristles each having a first end and a second end; and
b) a brush-seal bristle holder having a weldable front plate including opposing first and second edges and having a weldable back plate including opposing first and second edges, wherein said bristles are disposed between said front and back plates with said first ends of said bristles disposed between said first and second edges of said front and back plates, with said first ends of said bristles spaced apart from said first edges of said front and back plates, and with said second ends of said bristles extending beyond said second edges of said front and back plates, wherein said bristles are clamped between said front and back plates, wherein said front and back plates are welded together proximate said first edges of said front and back plates by a weldment which is spaced apart from said bristles, wherein said front plate has a first surface including a first step, wherein said back plate has a second surface including a second step proximate and opposing said first step, wherein said bristles are disposed between said first and second surfaces, wherein said first surface proximate said first step contacts some of said bristles, and wherein said second surface proximate said second step contacts some of said bristles.

13. The brush seal of claim 12, wherein each of said bristles has a diameter of less than 0.001 inch.

14. The brush seal of claim 12,13 or 14, wherein said bristles are filaments of an aramid filament yarn.

15. The brush seal of claim 12, 13 or 14, wherein bristles have a packing density of greater than 100,000 filaments per inch.
